# EUROPÄISCHE PATENTSCHRIFT

(11) **EP 0 650 340 B1**
(45) Veröffentlichungstag und Bekanntmachung des Hinweises auf die Patenterteilung: **04.12.1996**
(21) Anmeldenummer: 94915564.2
(22) Anmeldetag: 29.04.1994
(51) Int. Cl.: A47B 88/04, B60B 33/00, F16C 13/00

(54) **LAUFROLLE FÜR ROLLEN-AUSZIEHFÜHRUNGEN**
CASTOR FOR EXTENSIBLE FURNITURE ELEMENTS GUIDED ON CASTORS
ROULETTE POUR PARTIES DE MEUBLES EXTENSIBLES GUIDEES SUR ROULETTES

(30) Priorität: 18.05.1993 DE 9307532 U
(43) Veröffentlichungstag der Anmeldung: 03.05.1995
(73) Patentinhaber: MEPLA-WERKE LAUTENSCHLÄGER GmbH & Co. KG, D-64354 Reinheim (DE)
(72) Erfinder: LAUTENSCHLÄGER, Horst, D-64354 Reinheim (DE)
(74) Vertreter: Helber, Friedrich G., Dipl.-Ing.
(86) Internationale Anmeldenummer: EP9401375
(87) Internationale Veröffentlichungsnummer: WO9426147

(56) Entgegenhaltungen:
- DE-A- 3 507 821
- DE-U- 8 522 387

## Beschreibung

Die Erfindung betrifft eine Laufrolle für Rollen-Ausziehführungen für ausziehbare Möbelteile, mit einem drehbar auf einer Rollenachse gelagerten, aus einem formstabilen harten Kunststoff hergestellten Rollenkörper, der eine offen in der Lauffläche mündende, umlaufende nutartige Aussparung mit wenigstens einer Vertiefung aufweist, und mit einem etwas über die Lauffläche des Rollenkörpers vortretenden integrierten Laufring aus elastisch verformbarem Material, vorzugsweise elastomerem Kunststoff, welcher in fließfähiger Form in die nutartige Aussparung mit der wenigstens einen Vertiefung eingebracht wird und in seinem elastisch verformbaren Endzustand formschlüssig in die nutartige Aussparung und die wenigstens eine Vertiefung eingreift.

Seit längerem ist es üblich, bei Rollen-Ausziehführungen die Laufrollen mit Laufringen zur Dämpfung der beim Abrollen der Laufflächen auf den Führungs- bzw. Laufschienen der Ausziehführung entstehenden Abrollgeräusche auszustatten. Ursprünglich wurden diese Laufringe als elastische O-Ringe gesondert hergestellt und auf die Laufrollen aufgesetzt. Diese reifenartigen, gesonderten Laufringe konnten sich jedoch mit der Zeit aufweiten, verrutschen und unter Umständen dann die Ausziehführung blockieren.

Zur Vermeidung dieses Nachteils ist es bekannt (DE 35 07 821 A1; DE 39 10 934 A1) Laufrollen mit einem integrierten Laufring aus elastisch verformbarem Material, vorzugsweise elastomerem Kunststoff, bekannt, der in fließfähiger Form in dafür vorgesehene Aussparungen am Rollenkörper eingebracht wird und in seinem elastisch verformbaren Endzustand formschlüssig so auf dem Rollenkörper sitzt, daß ein Losewerden und sich Verschieben des Laufrings auf dem Rollenkörper wirksam vermieden wird. Dabei ist die Ausbildung der Laufrollen so getroffen, daß der Rollenkörper eine offen in der Lauffläche mündende umlaufende nutartige Aussparung aufweist, in welcher der etwas über die Lauffläche des Rollenkörpers vortretende Laufring aus elastisch verformbarem Material angeordnet ist, und daß in wenigstens einer der einander zugewandten Seitenflächen und/oder in der umlaufenden Bodenfläche der nutartigen Aussparung wenigstens eine, vorzugsweise mehrere Vertiefung(en) vorgesehen ist bzw. sind, in welcher bzw. welchen das in fließfähiger Form eingebrachte und anschließend in den elastisch verformbaren Zustand überführte Material des Laufrings zusätzlich formschlüssig eingreift und daß ferner in einer die nutartig umlaufende Aussparung seitlich begrenzenden Seitenwand des formstabilen Rollenkörpers wenigstens eine Einspritzbohrung für das noch fließfähige Laufringmaterial mündet, deren jeweils anderes Ende im Innern der nutartigen Aussparung mündet bzw. münden. Bei der Fertigung dieser bekannten Laufrolle ist es notwendig, die Einspritzbohrungen für das noch fließfähige Laufringmaterial und damit die gesamte Spritzgußform mit den Einspritzdüsen, die das Laufringmaterial einbringen, genau auszurichten. Hierdurch wird die Fertigung erheblich kompliziert.

Es ist daher die Aufgabe der vorliegenden Erfindung, die bekannte Laufrolle so weiterzubilden, daß der Rollenkörper einerseits und der integrierte Laufring aus elastischem Material andererseits in zwei aufeinanderfolgenden Spritzgußvorgängen fertigungstechnisch möglichst einfach und kostengünstig hergestellt werden können.

Ausgehend von einer Laufrolle der eingangs genannten Art wird diese Aufgabe erfindungsgemäß dadurch gelöst, daß im Rollenkörper eine offen in eine Seitenfläche des Rollenkörpers mündende umlaufende Ringnut vorgesehen ist und daß die von der in der Lauffläche des Rollenkörpers offen mündenden umlaufenden nutartigen Aussparung für den integrierten Laufring ausgehende wenigstens eine Vertiefung als wenigstens ein bis zu der offen in der Seitenfläche mündenden Ringnut durchgehender Kanal ausgebildet ist. Durch die Anordnung einer offen mündenden Ringnut in einer Seitenfläche des Rollenkörpers anstelle der Einspritzbohrungen kann nun das fließfähige elastisch verformbare Material unabhängig von der jeweiligen Stellung der Spritzgußform in bezug auf die Rotationsachse, d.h. die Rollenachse, eingespritzt werden. Das noch flüssige elastische Material verteilt sich dabei von der Ringnut ausgehend durch den zu der außen umlaufenden nutartigen Aussparung durchgehenden wenigstens einen Kanal bis in die nutartige Aussparung, die während des Einspritzvorgangs laufflächenseitig durch einen sie vollständig umgreifenden Formteil abgeschlossen ist. Vorzugsweise geht der wenigstens eine Kanal von der Bodenfläche der umlaufenden Aussparung aus.

Damit sich das noch flüssige Material für den Laufring möglichst leicht verteilt, ist es zweckmäßig, mehrere, vorzugsweise vier, Kanäle zwischen der Ringnut und der umlaufenden nutartigen Aussparung vorzusehen, die zweckmäßigerweise in gleichen Winkelabständen versetzt von der nutförmigen Aussparung ausgehend verteilt sind.

Insbesondere für den Fall, daß mehrere Kanäle vorgesehen sind, sollten diese in Öffnungsrichtung der die nutartige Aussparung bildenden Formteile der Rollenkörper-Spritzguß form verlaufen und so geformt sein, daß sie keinen das Öffnen der Form behindernden Hinterschnitt bilden.

In bevorzugter Weiterbildung der Erfindung ist die Ringnut in einer kreisscheibenförmigen Vertiefung innerhalb der Seitenwand des Rollenkörpers angeordnet, damit die Tiefe der Ringnut, die für eine Verbindung mit den vorzugsweise in der Laufringebene liegenden Kanälen notwendig ist, gering gehalten werden kann.

Im folgenden ist die Erfindung anhand eines Ausführungsbeispiels in Verbindung mit der Zeichnung näher erläutert, und zwar zeigen:
- Fig. 1: eine Schnittansicht durch den Rollenkörper und den Laufring der Laufrolle in der Ebene des integrierten Laufrings, senkrecht zur Rollenachse;
- Fig. 2: eine Ansicht auf die Lauffläche der Laufrolle, bei der der elastische Laufring im aufgebrochenen Bereich an der Verbindungsstelle zwischen Kanal und Ringnut im Schnitt dargestellt ist; und
- Fig. 3: eine Ansicht der Laufrolle von der Seite, in der die Ringnut mündet.

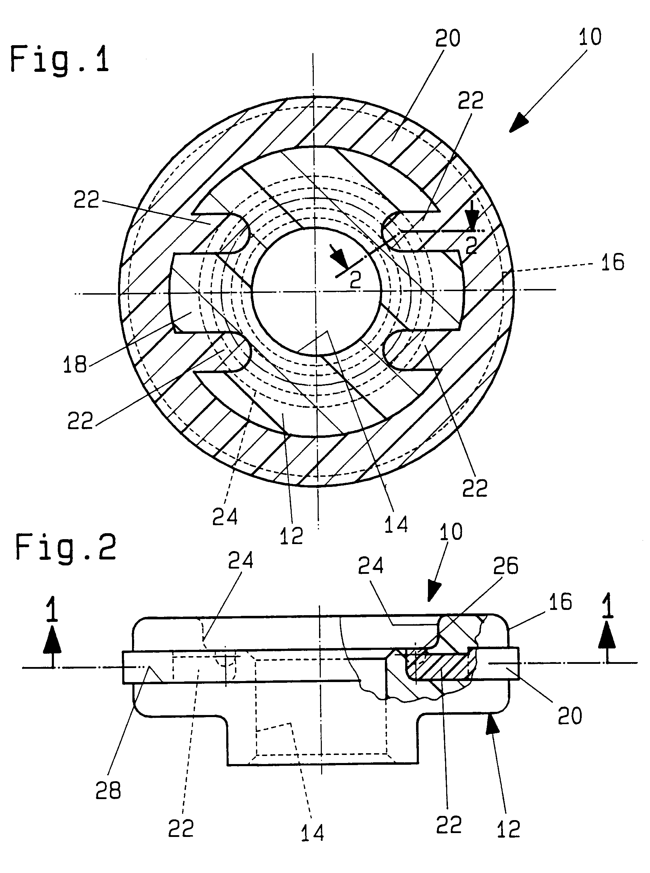

Die in Figur 1 gezeigte Laufrolle 10 weist einen im Spritzgußverfahren aus einem geeigneten formstabilen Kunststoff hergestellten starren Rollenkörper 12 auf, der grundsätzlich die Form einer relativ dicken an ihrem Umfang kreisförmig begrenzten Scheibe hat und mit einer Mittelbohrung 14 versehen ist, welche die Lagerbohrung für die drehbare Lagerung des Rollenkörpers 12 auf einem nicht dargestellten, an der Lauf- oder Führungsschiene einer Ausziehführung befestigten Lagerzapfen bildet. In der Umfangsfläche 16 des Rollenkörpers ist eine umlaufende nutartige Aussparung gebildet, die sich in der Tiefe von der Umfangsfläche 16 bis zu einer Bodenfläche 18 der nutartigen Aussparung erstreckt. Die nutartige Aussparung ist durch einen Laufring 20 aus einem elastisch verformbaren Material - vorzugsweise einem elastomeren Kunststoff - ausgefüllt, der die Lauffläche 16 des Rollenkörpers 12 in Radialrichtung geringfügig überragt, so daß die Laufrolle 10 auch unter Gewichtsbelastung hauptsächlich auf dem Laufring 20 und nicht auf dem Rollenkörper 12 abrollt.

Vom Boden 18 der nutartigen Aussparung gehen im dargestellten Beispiel 4 Kanäle 22 ab. Die Kanäle 22 verlaufen alle in Öffnungsrichtung der Spritzgußform und münden, wie in Fig. 2 dargestellt, in eine in einer kreisscheibenförmigen Vertiefung 24 innerhalb einer Seitenwand des Rollenkörpers 12 angeordneten Ringnut 26.

Die Einbringung des Laufrings 20 erfolgt durch Einspritzen des Materials für den Laufring in fließfähigem Zustand über eine entsprechend geformte an die Ringnut 26 angesetzte - hier nicht dargestellte - Einspritzdüse. Hierbei wird der Rollenkörper 12 in einer ihn allseitig umschließenden Form gehalten, in welcher im Bereich der Lauffläche 16 des Rollenkörpers 12 eine Ringnut ausgebildet ist, in die das eingespritzte Material eintritt und so den die Lauffläche 16 radial überragenden Bereich des Laufrings 20 mit ausbildet. Der integrierte Laufring 20 füllt schließlich die nutartige Aussparung 28, die Kanäle 22 und die Ringnut 26 aus. Dadurch ist das in der Ringnut 28 befindliche elastische Material durch das Material, das sich in den Kanälen 22 befindet, mit dem Material in der Ringnut 26 stegartig verbunden, was ein Losewerden oder sich Verschieben des Laufrings sicher verhindert. Als Material für den Laufring wird entweder ein nach dem Erkalten die gewünschte elastische Verformbarkeit aufweisender thermoplastischer Kunststoff in erwärmtem Zustand oder auch ein unmittelbar vor dem Einspritzen aus zwei flüssigen Komponenten hergestelltes Elastomer verwendet, wobei die Vernetzung durch Wärmezufuhr über die beheizte Form beschleunigt werden kann.

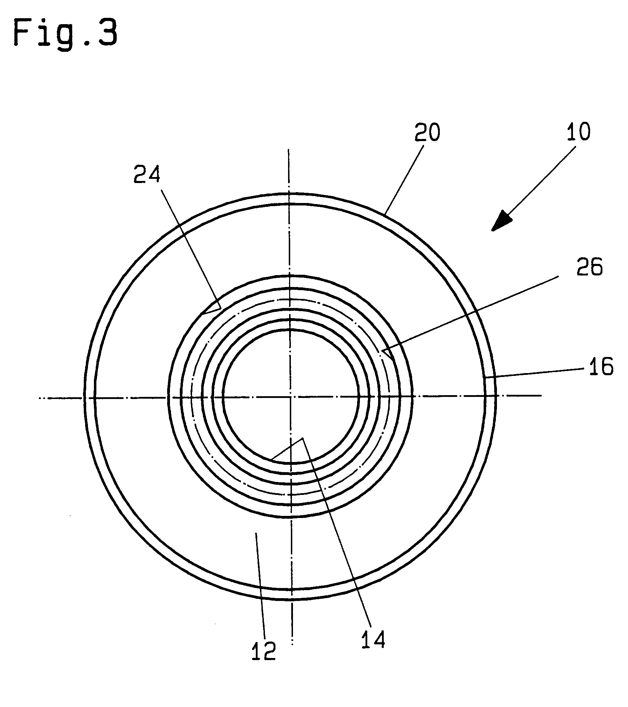

Figur 3 zeigt eine Ansicht der Laufrolle von der Seite, in der nochmals die Anordnung der Ringnut 26 innerhalb der kreisscheibenförmigen Vertiefung 24 in der gezeigten Seite des Rollenkörpers 12 dargestellt ist.

## Patentansprüche

1. Laufrolle (10) für Rollen-Ausziehführungen für ausziehbare Möbelteile, mit einem drehbar auf einer Rollenachse gelagerten, aus einem formstabilen harten Kunststoff hergestellten Rollenkörper (12), der eine offen in der Lauffläche mündende umlaufende nutartige Aussparung (28) mit wenigstens einer Vertiefung aufweist, und mit einem etwas über die Lauffläche des Rollenkörpers vortretenden integrierten Laufring (20) aus elastisch verformbarem Material, vorzugsweise elastomerem Kunststoff, welcher in fließfähiger Form in die nutartige Aussparung (28) mit der wenigstens einen Vertiefung eingebracht wird und in seinem elastisch verformbaren Endzustand formschlüssig in die nutartige Aussparung und die Vertiefung eingreift,
**dadurch gekennzeichnet**,
daß im Rollenkörper (12) eine offen in einer Seitenfläche des Rollenkörpers (12) mündende umlaufende Ringnut (26) vorgesehen ist und daß die von der in der Lauffläche des Rollenkörpers (12) offen mündenden umlaufenden nutartigen Aussparung (28) für den integrierten Laufring (20) ausgehende wenigstens eine Vertiefung als wenigstens ein bis zu der offen in der Seitenfläche mündenden Ringnut (26) durchgehender Kanal (22) ausgebildet ist.

2. Laufrolle (10) nach Anspruch 1, dadurch gekennzeichnet, daß der wenigstens eine Kanal (22) von der Bodenfläche (18) der umlaufenden nutartigen Aussparung (28) ausgeht.

3. Laufrolle (10) nach Anspruch 1 oder 2, dadurch gekennzeichnet, daß mehrere, vorzugsweise vier, Kanäle 22 vorgesehen sind.

4. Laufrolle (10) nach Anspruch 3, dadurch gekennzeichnet, daß die Kanäle (22) in gleichen Winkelabständen versetzt von der nutförmigen Aussparung (28) ausgehen.

5. Laufrolle (10) nach einem der Ansprüche 1 bis 4, dadurch gekennzeichnet, daß der Kanal oder die Kanäle (22) in Öffnungsrichtung der die nutartige Aussparung (28) bildenden Formteile einer Rollenkörper-Spritzgußform verlaufen und so geformt sind, daß sie keinen das Öffnen der Form behindernden Hinterschnitt bilden.

6. Laufrolle (10) nach einem der Ansprüche 1 bis 5, dadurch gekennzeichnet, daß die Ringnut (26) in einer kreisscheibenförmigen Vertiefung (24) innerhalb der Seitenwand des Rollenkörpers (12) angeordnet ist.

## Claims

1. A wheel (10) for roller pull-out guides for furniture parts, which can be pulled out, with a roller body (12) made from dimensionally stable hard plastic rotatably mounted on a roller axle, which roller body (12) has an open, peripheral groove-like recess (28), which ends in the bearing surface and has at least one depression, and with an integrated tire (20) of an elastically deformable material, preferably an elastomeric plastic, protruding slightly above the bearing surface of the roller body, which tire is introduced in flowable form into the groove-like recess (28) with the at least one depression and, in its elastically deformable final state, positively engages the groove-like recess and the depression, characterized in that a peripheral, annular groove (26), ending in a lateral surface of the roller body (12), is provided in the roller body (12), and in that the at least one depression, ending open in the bearing surface of the roller body (12) and starting from the peripheral, groove-like recess (28) for the integrated tire (20), is constructed as at least one channel (22) continuing up to the open annular groove (26) ending in the lateral surface.

2. The wheel (10) of claim 1, characterized in that the at least one channel (22) starts out from the bottom surface (18) of the peripheral groove-like recess (28).

3. The wheel (10) of claims 1 or 2, characterized in that several, preferably four, channels (22) are provided.

4. The wheel (10) of claim 3, characterized in that the channels (22) start out from the groove-like recess (28) offset at equal angular intervals.

5. The wheel (10) of one of the claims 1 to 4, characterized in that the channel or channels (22) extend in the opening direction of the molded parts of a roller body injection mold forming the groove-like recess (28) and are shaped so that they do not form an undercut that would interfere with the opening of the mold.

6. The wheel (10) of one of the claims 1 to 5, characterized in that the annular groove (26) is disposed in a circular disk-shaped depression (24) within the side wall of the roller body (12).

## Revendications

1. Galet de roulement (10) pour guides de tirage à galets pour éléments de meuble tirables, comportant un corps de galet (12) en matière plastique dure de forme stable, monté tournant sur un axe, qui présente un évidement périphérique du genre rainure (28) débouchant dans la surface de roulement et ayant au moins un creux, et une bague de roulement intégrée (20) en matière déformable élastiquement, de préférence en matière plastique élastomère, saillant un peu de la surface de roulement du corps de galet, qui est placée sous forme fluide dans l'évidement du genre rainure (28) ayant au moins un creux et, dans son état final déformable élastiquement, est engagée, avec correspondance de forme, dans l'évidement du genre rainure et dans le creux,
caractérisé par le fait
que dans le corps de galet (12) est prévue une rainure annulaire périphérique (26) débouchant dans une surface latérale du corps de galet (12), et que le ou chaque creux partant de l'évidement périphérique du genre rainure (28) débouchant dans la surface de roulement du corps de galet (28) prévu pour la bague de roulement intégrée (20) est un canal (22) traversant jusqu'à la rainure annulaire (26) débouchant dans la surface latérale.

2. Galet de roulement (10) selon la revendication 1, caractérisé par le fait que le ou chaque canal (22) part de la surface de fond (18) de l'évidement périphérique du genre rainure (28).

3. Galet de roulement (10) selon l'une des revendications 1 et 2, caractérisé par le fait qu'il est prévu plusieurs canaux (22), de préférence quatre.

4. Galet de roulement (10) selon la revendication 3, caractérisé par le fait que les canaux (22) partent de l'évidement en forme de rainure (28) en étant également espacés angulairement.

5. Galet de roulement (10) selon l'une des revendications 1 à 4, caractérisé par le fait que le canal ou les canaux (22) s'étendent dans la direction d'ouverture des parties d'un moule de moulage par injection du corps de galet qui forment l'évidement du genre rainure (28) et sont faits de façon à ne pas former de contre-dépouille gênant l'ouverture du moule.

6. Galet de roulement (10) selon l'une des revendications 1 à 5, caractérisé par le fait que la rainure annulaire (26) se trouve dans un creux en forme de disque (24) situé à l'intérieur de la paroi latérale du corps de galet (12).
